# EUROPEAN PATENT APPLICATION

(11) **EP 1 100 023 A2**
(43) Date of publication of application: **16.05.2001**
(21) Application number: 00309978.5
(22) Date of filing: 08.11.2000
(51) Int. Cl.: G06F 17/30

(54) **Contents update state monitoring method, apparatus and program**

(30) Priority: 09.11.1999 JP 31877699; 21.09.2000 JP 2000287072
(71) Applicant: FUJITSU LIMITED, Kawasaki-shi, Kanagawa 211-8588 (JP)
(72) Inventor: Wakidani, Masaru, Fujitsu Personal Comp. Sys. Ltd., Inagi-shi, Tokyo (JP); Mizuno, Joe, Fujitsu Personal Comp. Sys. Ltd., Inagi-shi, Tokyo (JP); Kumazawa, Takeshi, Nakahara-ku, Kawasaki-shi, Kanagawa 211 (JP); Ikeda, Yuuichirou, Nakahara-ku, Kawasaki-shi, Kanagawa 211 (JP)
(74) Representative: Stebbing, Timothy Charles

(57) **Abstract**

A user of the Internet or an Intranet designates a portion of particular interest in content (such as a web page) received from a server. Next time the content is received, the designated portion is compared with that received previously and the user is alerted to any change.

## Description

The present invention relates to a technique for identifying a change in a portion of network or local machine contents (content).

More particularly, the present invention relates to a contents update monitoring method, apparatus and program capable of management of information about an updated state of content data forming a portion of contents(of a web page) held (stored) by a server in a network, or contents held by a terminal which functions as a local machine.

In general, a network browser for use with the Internet, an Intranet, etc., can locate contents through an address called a Uniform Resource Locator (URL).

Also, such a browser not only designates contents of a server via a network, but also designates in a terminal a directory and a file name as an address to enable the file (contents) to be displayed.

Ordinarily, the above-described browser or a server manages data on the dates of updating of source files, i.e., Hyper Text Mark-up Language (HTML) documents. When a web page is formed as such a HTML document and some of its content is updated, the browser or the server rereads the entire page and displays the read page on a display of a user's terminal.

In update management based on the conventional browser program, even a change of content in only a portion of a source file leads to rereading of all files related to the changed page, so that a considerably long time is required to complete the display of the target page.

In particular, in a case where one image file is updated in a page configuration requiring display of a plurality of image files, a need arises to reread all the image files from a server, since the unit of data treated as an object of update management by the browser program is one page. A delay in completing display of such files is undesirable and considerably lowers the usefulness of update management.

On the other hand, even if a user needs to know whether or not only a particular portion of one page has been updated, the browser program performs update information management of the entire page to provide update information of other portions of the page which do not interest the user. Thus, the browser program fails to provide useful information according to an individual user's preference.

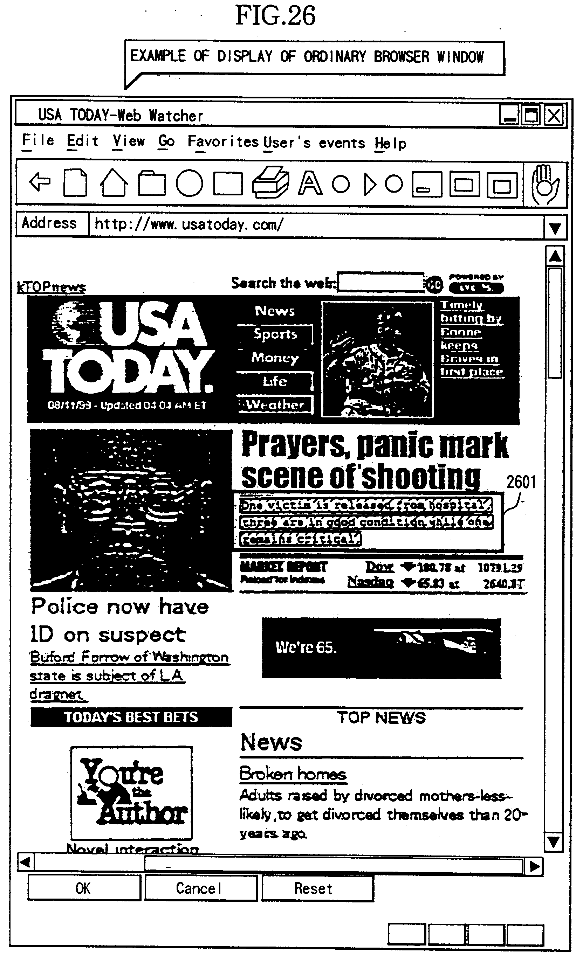

For example, a user viewing a web page may merely wish to know whether or not a single sentence in a particular box area 2601 such as shown in Fig. 26 has been updated.

It is a consideration of the present invention to provide a technique for enabling management of update information about a portion of a page of content selected by a user.

Another consideration of the present invention is to provide a technique for detecting, without being influenced by an environment of a terminal (client), an updated state of a portion of contents (e.g. part of a web page) selected by an individual user to inform the user of it.

According to one aspect of the present invention, there is provided a method of identifying an updated portion of contents data, comprising the steps of: analyzing first contents data to identify a portion of the data designated by a user; storing the data and the designated portion of the data; extracting, from second contents data, a portion corresponding to the designated portion when the second contents data is received from a server; and comparing the extracted portion (second contents data) corresponding to the designated portion with the stored data (first contents data), thus enabling ascertainment as to whether or not the data portion has been updated.

The present invention is particularly effective with respect to the contents data that is distributed from an external server managed outside the user's influence.

The server may be a Web server in the Internet, and the contents data distributed as HTML document data from the Web server. Tree structure analysis described below is performed for the purpose of changing the HTML document into such a tree structure form that the document data is easily manageable hierarchically. A designated portion in such a tree structure form can be identified as a manageable set of tag names and table data arranged in accordance with the tag order.

The above-described process can be provided as a computer- executable program which may be stored on a medium (e.g. a CD-ROM) or downloaded via a communication line.

According to another aspect of the present invention, there is provided a first apparatus for comparing contents data, comprising: a first data acquisition means for obtaining first contents data; a display control means for displaying the first contents data; a designation means for designating a portion of the first contents data; an identification means for identifying the designated portion of the first contents data; a second data acquisition means for obtaining second contents data; a storage means for storing the designated portion of the first contents data and particular information about the designated portion; and a comparison means for comparing the designated portion read out from the storage means and a corresponding portion of data obtained from the second contents data.

The storage means may also store a date or a size of the first contents data, and the comparison means may also compare the designated portion read out from the storage means and the corresponding portion data obtained from the second contents data if dates or sizes of the first contents data and the second contents data do not coincide with each other.

It is preferred that the identification means includes a tree structure forming means for analyzing the first contents data to extract a tree structure from the same, and identifies the designated portion by using the tree structure.

It is further preferred that each of the first contents data and the second contents data includes tag information and display-object contents, and the tree structure forming means analyses the first contents data to extract said tree structure from the same by using the tag information.

A notification means may also be provided which provides notification of a result of the comparison by the comparison section if the result is that there is a difference.

Each of the first contents data and the second contents data may be received from an external terminal through a network.

Preferably, the first contents data and the second contents data are identical in file name.

According to yet another aspect of the present invention there is provided a storage means for storing information on a location of contents data and a designated portion data of the contents data, an acquisition means for acquiring contents data designated by the location information, and a comparison means for comparing the stored designated data portion read out from the storage means and a corresponding portion data of the contents data acquired by the acquisition means.

The location information of the contents data and the designated portion data of the contents data may be stored by being related to a user.

A user identification means may be further provided which identifies a user who has gained access, when the acquisition means acquires contents data according to the identified user.

It is preferable that, when a user who has gained access is identified, the acquisition means can acquire contents data according to the identified user.

A notification means may be further provided which provides notification of a result of the comparison by the comparison means if the result is that there is a difference.

The storage means may store opportune time designation information, and the acquisition means can acquire the contents data according to opportune time designation information.

According to the present invention, update information about a portion of a page of contents selected by user is manageable.

In the step of identifying a portion of content data designated by a user according to the present invention, analysis processing for extracting a tree structure may be performed. In a case where a portion designated by a user is identified without tree structure analysis, it is necessary to separately ascertain a starting point and an ending point of the portion designated by the user. In contrast, in the analysis processing a portion of content data designated by a user is identified as a branch portion in a tree structure, so that the ending point can be definitely recognized. As a result, processing efficiency is improved.

Further, according to the present invention, identification and comparison (checking) of a contents updated portion are performed on a server. Therefore, it is possible to determine an updated state and to inform a user of the determined state without being influenced by an environment of a terminal (client).

Also, in such a case, the server may start checking updates of contents when the user gains access to the server. In this manner, the server can obtain latest contents data by performing checking fewest necessary times. Therefore, this method is practically advantageous.

Other aspects of the invention are as defined in the accompanying independent claims.

A detailed description of the present invention will now be given, by way of example, with reference to the accompanying drawings, in which:
Fig. 1 is a block diagram showing the configuration of a system in a first embodiment of the present invention;
Fig. 2 is a diagram showing the program configuration of a terminal shown in Fig. 1;
Fig. 3 is a diagram showing in detail the configuration of an application program shown in Fig. 2;
Fig. 4 is a diagram of a tree structure;
Fig. 5 is an example of a graphical image according to a method of designating a data portion;
Fig. 6 is a diagram of a tree structure;
Fig. 7 is a diagram of table data;
Fig. 8 is an example of a graphical image showing a designation method of a designated portion;
Fig. 9 is a diagram of a tree structure;
Fig. 10 is a diagram of table data;
Fig. 11 is a flowchart of a process in accordance with a data forming section of the application program;
Fig. 12 is a flowchart of a process in accordance with a data reproduction and comparison section of the application program;
Fig. 13 is a flowchart of a process in accordance with the application program in a second embodiment of the present invention;
Fig. 14 is an example of a graphical image according to a method of designating a data portion in the second embodiment;
Fig. 15 is an example of a graphical image according to a method of displaying an update result in the second embodiment;
Fig. 16 is a block diagram showing the system configuration and the program configuration in a third embodiment of the present invention;
Fig. 17 is a flowchart of a user authentication process (login process) ;
Fig. 18 is a diagram showing a stored state of update monitored contents information in a hard disk unit of a server;
Fig. 19 is a diagram showing update monitored contents information;
Fig. 20 is a flowchart of a process in accordance with a contents update monitoring program;
Fig. 21 is a graphical image representing a login window;
Fig. 22 is a graphical image representing a monitored contents list display window;
Fig. 23 is a graphical image representing a new creation page window;
Fig. 24 is a graphical image representing a window for a new creation wizard;
Fig. 25 is a graphical image representing a manual execution window; and
Fig. 26 is a graphical image representing an ordinary browser window.

In the following description, the terms "contents" and "contents data" refer to content accessible via the Internet or an Intranet.

### First Embodiment

### System Configuration

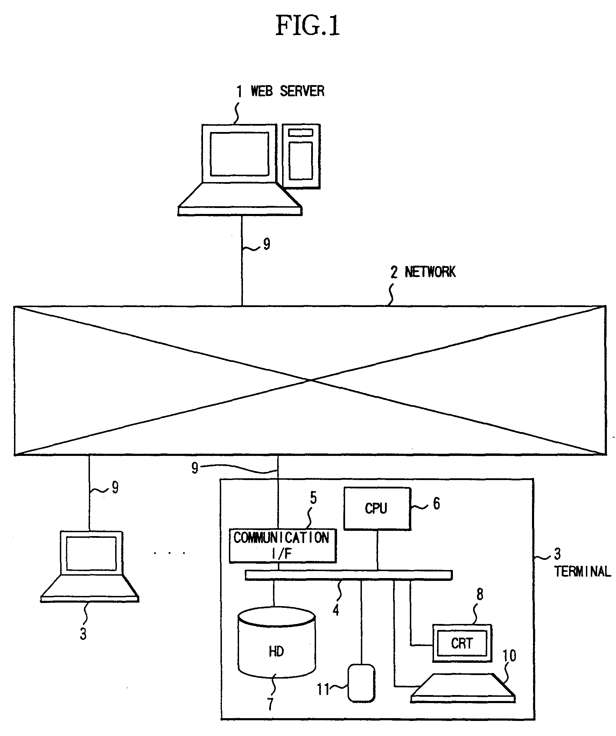

Fig. 1 shows the configuration of a contents update monitoring system which represents a first embodiment of the present invention. In the contents update monitoring system shown in Fig. 1, a Web server 1 can distribute Web page-compatible contents to a plurality of terminals 3 for users via a network 2 such as the Internet or an Intranet.

Each terminal 3 has a bus 4 which is connected to the network 2 through a communication interface 5. A central processing unit (CPU) 6 is connected to the bus 4. The CPU 6 can receive contents data distributed from the Web server 1 and display the data on a screen of a display unit (CRT) 8 based on a program installed on a hard disk unit (HD) 7.

The CPU 6 can not only display contents data distributed from the Web server 1 but also access data (files) stored in the hard disk unit 7 of the terminal 3 and display contents data read out therefrom.

The CPU 6 also receives an address and a command input through a keyboard 10 or a mouse 11, and transmits them to the Web server 1 via the communication interface (IF) 5 and the network 2.

### Program Configuration of Terminal

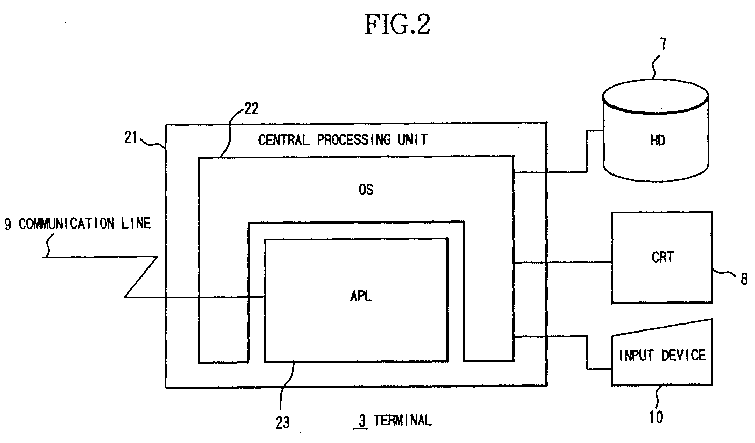

Referring to Fig. 2 showing a program configuration of the terminal 3 shown in Fig. 1, a group of programs indicated by reference numeral 21 includes an operating system (OS) 22 and an application program (APL) 23 installed on the OS 22, and is executed by the CPU 6.

The application program 23 is installed in the hard disk unit 7 and is read by the CPU 6 to be executed when necessary. The results of execution of the program 23 are displayed by the display unit 8. Commands and data input through the keyboard 10 are accepted or processed in accordance with the application program 23.

### (Configuration of Application Program)

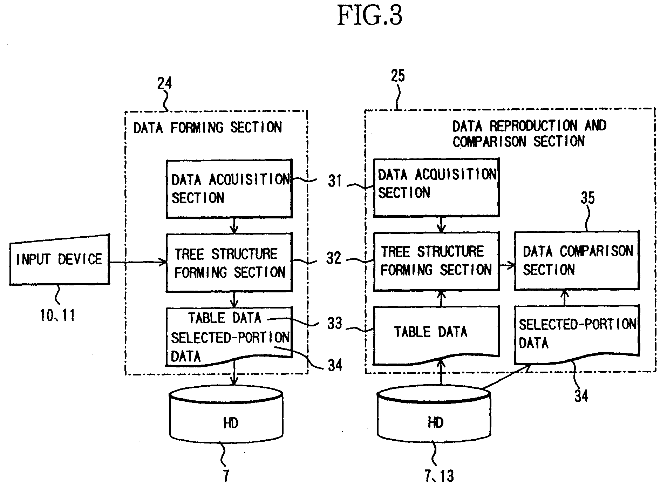

As shown in detail in Fig. 3, the application program 23 is constituted by a data forming section 24 and a data reproduction and comparison section 25. The data forming section 24 of the application program 23 includes as its subsections a data acquisition section 31 having a function of obtaining HTML data transmitted from the Web server 1, and a tree structure forming section 32 having a function of analyzing HTML data to extract a tree structure from an HTML file.

When the user of the terminal 3 designates a particular portion of such a tree structure by using the keyboard 10 or mouse 11, the tree structure forming section 32 forms table data 33 and selected-portion data 34. Table data 33 and selected-portion data 34 formed by the tree structure forming section 32 are stored in the hard disk unit 7 provided as an external storage unit.

The data reproduction and comparison section 25 of the application program 23 includes as its subsection a data comparison section 35 for making a comparison between a tree structure formed by the tree structure forming section 32 from data transmitted from the Web server 1 and obtained by the data acquisition section 31 (strictly speaking, selected-portion data formed from the tree structure) and selected-portion data 34 of a tree structure read out from the hard disk unit 7 to determine whether these groups of data match each other.

The configuration of the application program 23 formed as described above enables the user to compare a selected portion of tree structures accumulated on the terminal 3 side with the corresponding portion of HTML data in the Web server 1 to directly grasp whether or not the portion has been updated.

### (Extraction of Tree Structure and Formation of Table Data and Selected-portion Data)

The method of extracting a tree structure by the tree structure forming section 32 in the data forming section-24 will next be described with respect to the following HTML document by way of example.

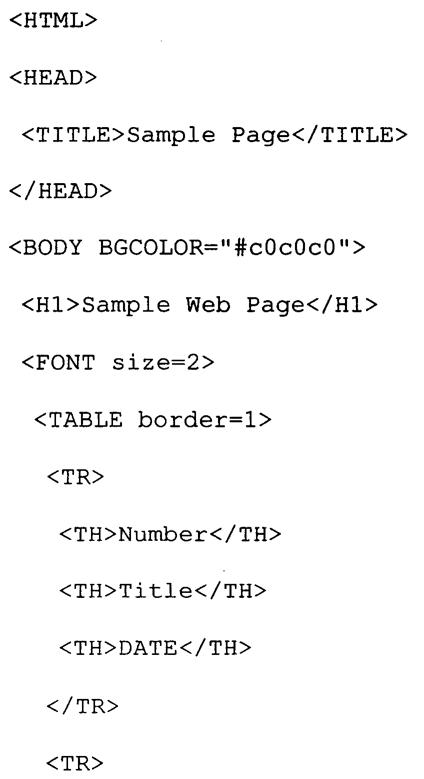

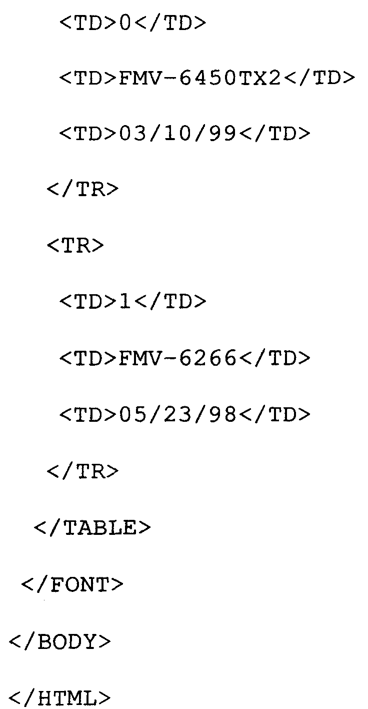

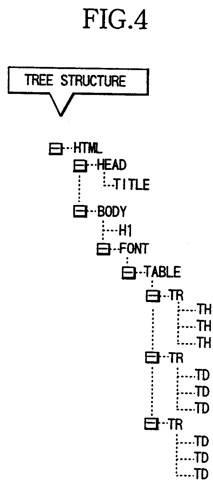

In HTML documents defined by such tags, the start and end of a tag having one signification are designated by the combination of <xxx> and </xxx> (x is a 1-byte character constituting the tag), and one tag is nested in another. The tree structure forming section 32 analyzes this notation to extract a tree structure such as shown in Fig. 4.

The tree structure forming section 32 in the data forming section 24 outputs table data 33 and selected-portion data 34. Table data 33 is a list formed by a combination of TAGNAMEs representing tag names and an INDEX in which, if a plurality of tags having the same name exist at the same level, the order of the tags is indicated.

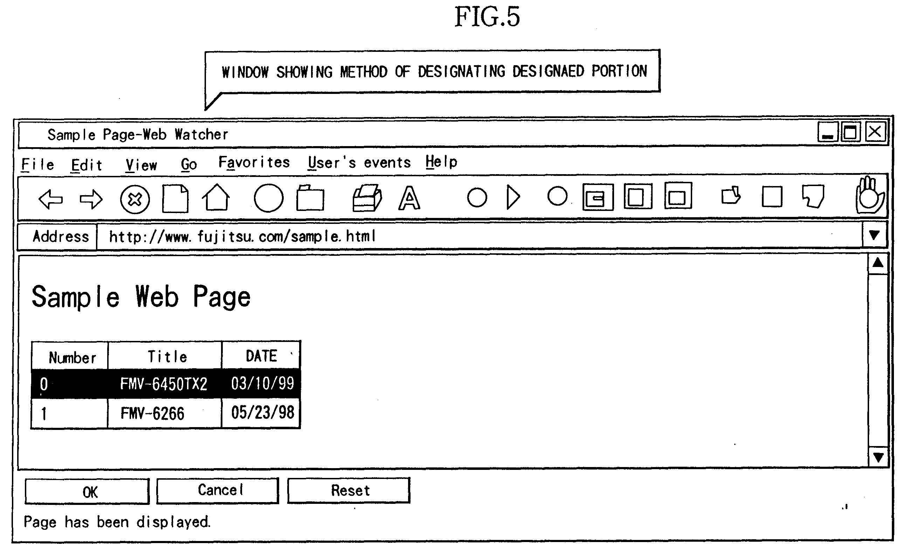

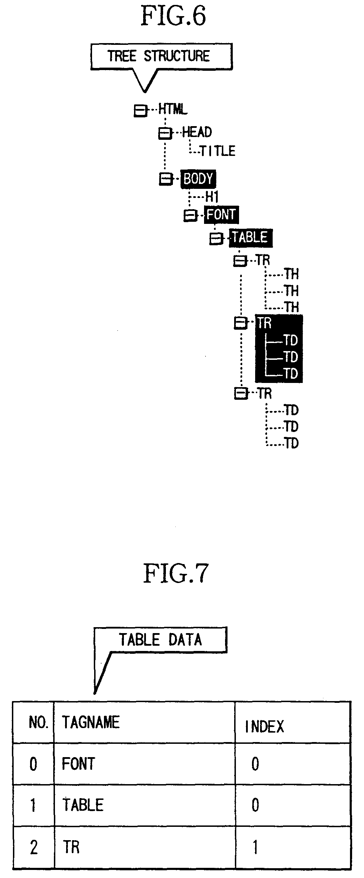

For example, if a browser installed in the terminal 3 displays, a graphical image such as that shown in Fig. 5, and if the user designates Number0-line data in the tagged table, portions of the tree structure corresponding to black-white-inverted characters are traced. The resulting table data 33 is as shown in Fig. 7.

Referring to the table data 33 shown in Fig. 7, a hierarchical structure defined by "FONT" → "TABLE" → "TR" is designated, and the group of data with the second "TR" tag is the portion designated by the user. As an INDEX item in the table data 33 corresponding to the "TR" tag, the value "1" indicating the second is entered.

The selected-portion data 34 formed simultaneously with the table data 33 by the tree structure forming section 32 in the data forming section 24 is as follows:

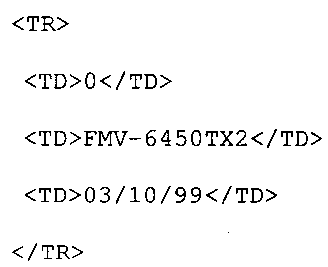

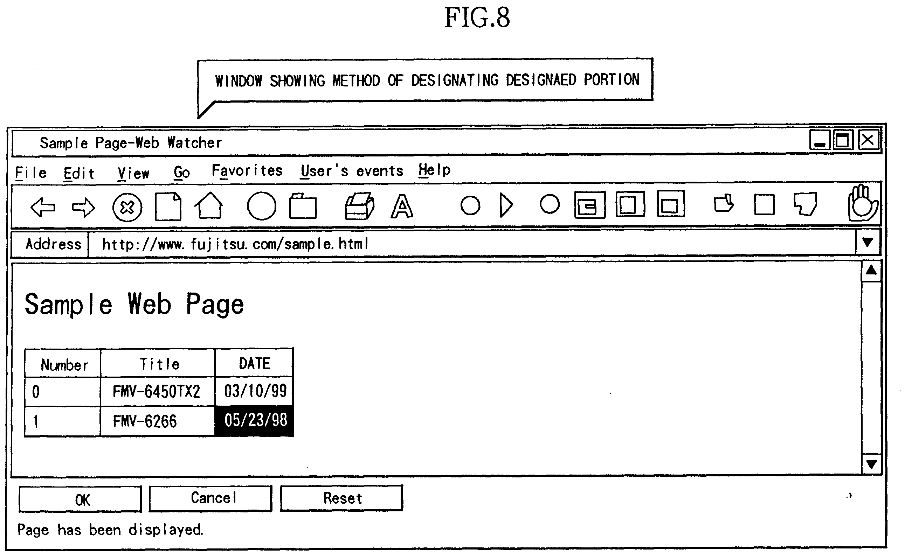

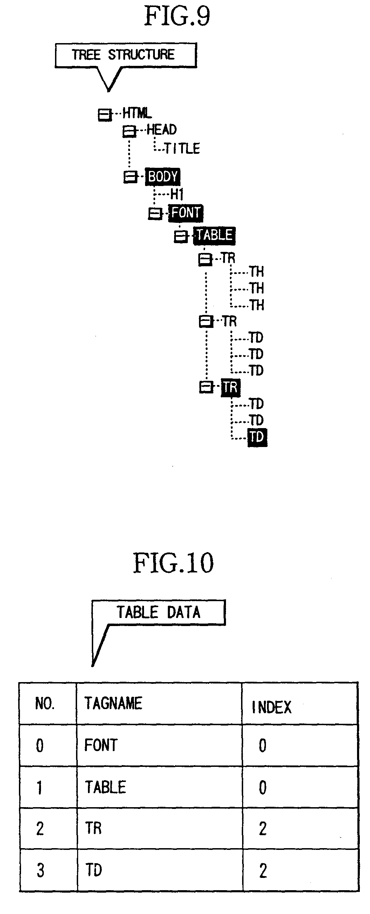

Referring to another example of the graphical image on the screen of the terminal 3 shown in Fig. 8, if the user designates a Number1 DATE item, i.e., "05/23/98", a tree structure extracted by the tree structure forming section 32 in the data forming section 24 is as shown in Fig. 9. The corresponding table data 33 is as shown in Fig. 10.

In this selection, since the DATE item in the Number1 line data is designated, the series of designated data ends in a "TD" tag (third "TD" tag). The selected-portion data 34 formed simultaneously with the table data 33 by the tree structure forming section 32 is <TD>05/23/98</TD>.

### (Process Corresponding to Data Forming Section)

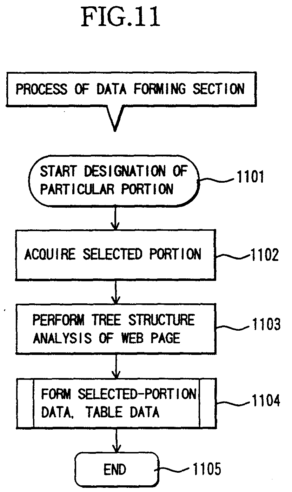

Referring to Fig. 11 showing a process in accordance with the data forming section 24 of the application program 23, the user operates the mouse 11 or the keyboard 10 to select an item in a menu (not shown) for starting the process of this embodiment of the present invention while contents data distributed from the Web server 1 is being displayed by the browser in the terminal 3. Thereafter, the user designates a particular portion of the data according to his or her need through a graphical image displayed by the browser. More specifically, this designation is performed by indicating the corresponding particular series of characters in reverse video, as shown in Fig. 5 or 8 (steps 1101, 1102).

Then, the tree structure forming section 32 extracts a tree structure such as shown in Fig. 4, 6, or 9 from the HTML document (Web page source file) corresponding to the presently-displayed contents data (1103). The tree structure forming section 32 forms table data 33 (see Fig. 7 or 10) and selected-portion data 34 (1104) on the basis of the extracted tree structure, and stores the data 33 and 34 in the hard disk unit 7, thereby completing the process (1105).

The table data 33 and the selected-portion data 34 are stored in the hard disk unit 7 along with URL information about the contents data selected as an update-check object (the server address, the directory name, the file name, etc.).

### (Process Corresponding to Data Reproduction and Comparison Section)

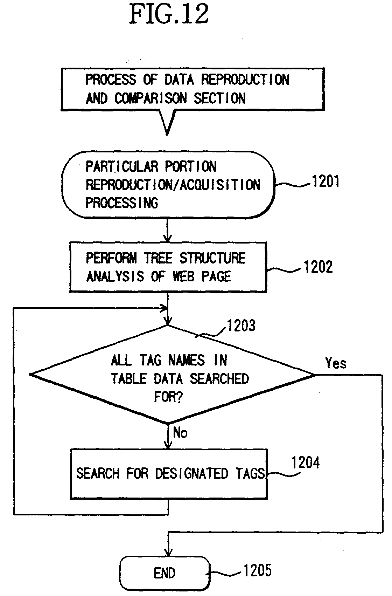

Fig. 12 shows a process in accordance with the data reproduction and comparison section 25 for examining whether the portion identified by the data forming section 24 has been updated or not.

When contents data is distributed to the terminal 3 from the Web server 1, the data acquisition section 31 analyzes the HTML document (Web page source file) corresponding to the distributed data, and the tree structure forming section 32 extracts the tree structure thereof (steps 1201, 1202).

The tree structure forming section 32 searches the hard disk unit 7 to obtain table data 23 corresponding to the HTML document. The tree structure forming section 32 searches the table data 33 for all the tag names, and inputs to the data comparison section 35 the tag names as selected-portion data to be compared (1203, 1204).

The data comparison section 35 compares the contents of the selected-portion data 34 read out from the hard disk unit 7 and the data within the corresponding HTML document tags, determines whether any update has been done or not, and notifies the user of the result of determination, thereby completing the process (1205).

Processing for this update check is started by a user menu-selecting operation or by accessing each URL stored by being related to the data table 33, access to which is triggered according to a schedule previously set (at an opportune time).

### Second Embodiment

A contents update monitoring system which represents a second embodiment of the present invention will next be described.

The system of the second embodiment, in comparison with the above-described system of the first embodiment, is characterized in that comparison of date data of an HTML file obtained as a source document and size data thereof is performed before comparison of table data and selected-portion data.

Therefore, the contents update monitoring system of this embodiment has the same configuration as that shown in Fig. 1, the same program configuration of terminal 3 as that shown in Fig. 2, and the same application program 23 configuration as that shown in Fig. 3 in detail.

### (Process Corresponding to Data Forming Section and Data Reproduction and Comparison Section)

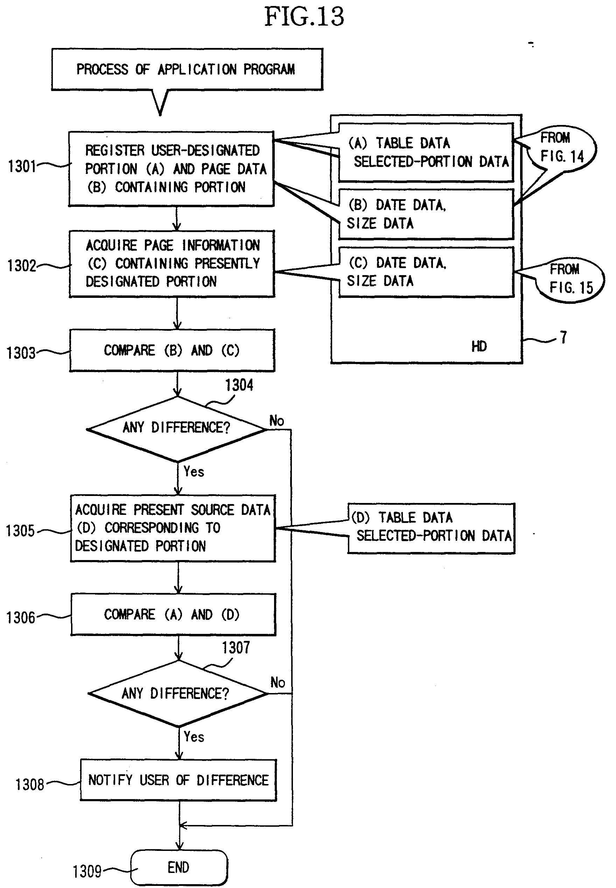

Fig. 13 shows a process in accordance with the data forming section 24 and the data reproduction and comparison section 25 of the application program 23 in the terminal 3.

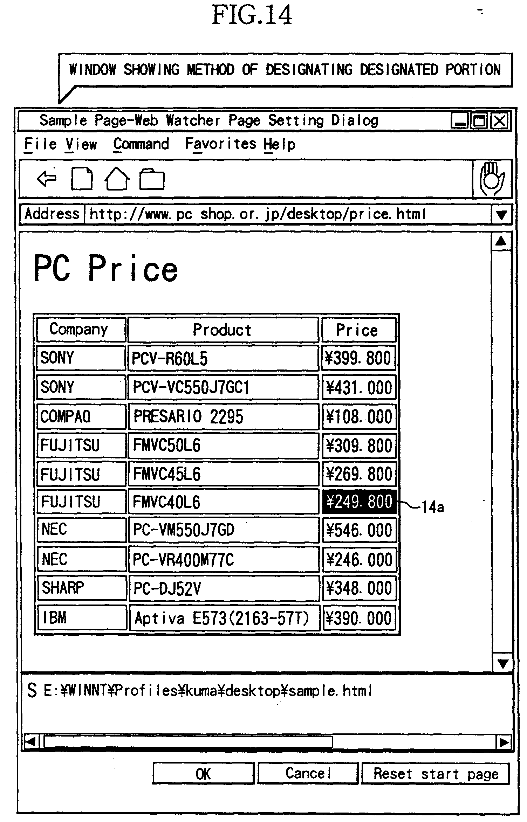

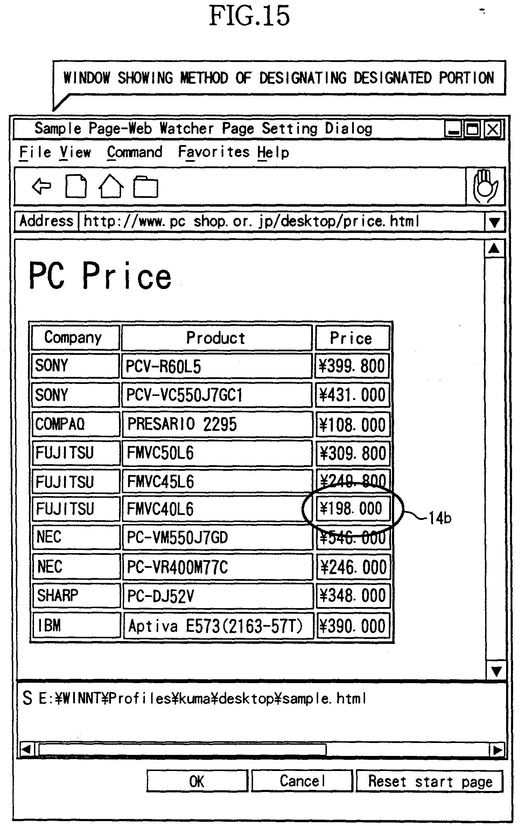

Fig. 14 shows an example of a graphical image for enabling a user to designate a portion 14a, and Fig. 15 shows another graphical image corresponding to Fig. 14, showing a designated portion 14b after an update.

First, on the terminal 3, the user designates a portion of contents data (shown in the browser window of Fig. 14) distributed from the Web server 1, which the user wishes to check as to whether or not it has been updated. The resulting state of the display in which the designated portion is indicated is as shown in Fig. 14. The designated portion shown in Fig. 14 is such that when price portion 14a corresponding to a model (product) "FMVC40L6" is updated, the user is informed of the updated content.

The data forming section 24 of the application program 23 in the terminal 3 obtains table data 33 and selected-portion data 34 as data (A) by the same processing as that performed by the tree structure forming section 32 in the first embodiment, and registers the data (A) in the hard disk unit 7.

Simultaneously, the data forming section 24 also registers in the hard disk unit 7 date data and size data (referred to collectively as data (B), hereinafter) of the corresponding HTML file (page) (step 1301 shown in Fig. 13).

Next, the data reproduction and comparison section 25 receives contents data on the same page distributed from the Web server 1 and displays the received contents data by the browser installed in the terminal 3 (see Fig. 15). At this time, the data reproduction and comparison section 25 obtains date data and size data (referred to collectively as data (C), hereinafter) from information on the HTML file forming the page (1302).

The data reproduction and comparison section 25 compares the data (C) with the above-mentioned data (B) (1303). If the date data and the size data are not different from those obtained at the preceding time, the data reproduction and comparison section 25 determines that the page has not been updated, and terminates the process (1304, 1309).

On the other hand, if the date data and the size data are different from those obtained at the preceding time, the data reproduction and comparison section 25 determines that the page has been updated, and obtains table data and selected-portion data (referred to collectively as data (D), hereinafter) corresponding to the designated portion as source data from the server 1 (1305).

The data reproduction and comparison section 25 compares the data (D) with the data (A) previously registered in the hard disk unit 7. Processing for this data comparison is the same as that of the data comparison section 35 in the data reproduction and comparison section 25 in the first embodiment, and the detailed description of it will not be repeated.

If the result of this comparison is that there is a difference between the data (A) and the data (D), the data comparison section 35 determines that the designated portion has been changed, and notifies the user of this state (1307, 1308). This notification to the user may be made by displaying the designated portion (indicated by 14b in Fig. 15) in a blinking (flashing) manner in the browser window shown in Fig. 15 or by outputting an alarm sound.

In the second embodiment of the present invention, as described above, a comparison of date data and size data is first performed by the application program 23 in the terminal 3, and a determination is then made as to whether close analysis of the existence/nonexistence of an update should be performed. The processing according to the second embodiment first enables determination of the apparent updated or non-updated condition of the page to be examined, thus efficiently performing processing for notifying the user of an update.

The first and second embodiments of the present invention have been described with respect to contents data in the HTML document format. However, needless to say, contents data in the Extensible Markup Language (XML) document format or the Standard Generalized Markup Language (SGML) can also be processed in the same manner according to the present invention.

### Third Embodiment

A contents update monitoring system which represents a third embodiment of the present invention will next be described.

In the above-described contents update monitoring systems of the first and second embodiments, identification, and detection and comparison (checking) of an updated portion of contents data are performed on a local machine terminal 3 (corresponding to a client in a server-client model), and the processes for identification and checking are executed by using resources in the terminal 3, i.e., the performance of the CPU 6, the storage capacities of the main storage unit (not shown) and the hard disk unit 7, etc.

Therefore, the performance of identifying and checking an updated portion of contents data and referring to checked results depends on the environment of the terminal 3. If some processing other than that for collection of contents data is performed simultaneously with collection of contents data, it is difficult to effectively use the resources. Also, since the performance of identifying and checking an updated portion of contents data depends on the environment of the terminal 3, the environment of the terminal 3 is only one medium through which a check and a reference to checked results can be made.

In the system according to the third embodiment of the present invention, identification and checking of a particular updated portion of contents data are performed on the Web server 1, thereby making it possible to check contents data and refer to checked results independently of the environment of the terminal 3.

### System Configuration

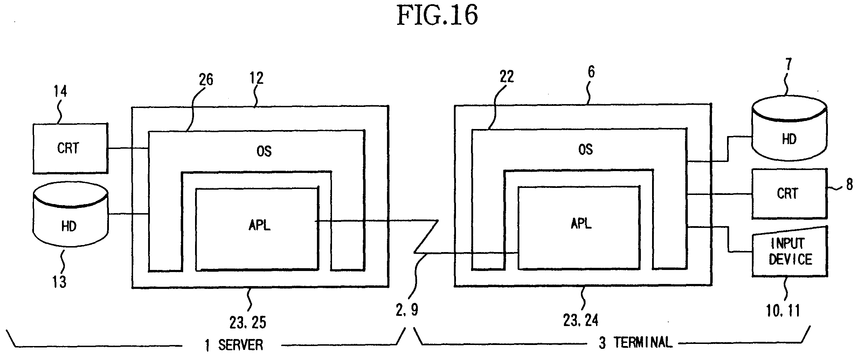

Fig. 16 shows the configuration of a contents update monitoring system which represents a third embodiment of the present invention. In the contents update monitoring system shown in Fig. 16, a Web server 1 can distribute Web page-compatible contents to a plurality of terminals (Web clients) 3 for users via a network 2 such as the Internet or an Intranet and a communication line 4.

The server 1 is a server computer constituted by a central processing unit (CPU) 12, a hard disk unit (HD) 13 provided as an external storage unit, a display unit (CRT) 14, etc.

The server 1 has the same configuration and components as those of the terminal 3 shown in Fig. 1. That is, it has other components (not shown) which are input devices, such as a keyboard 15 and a mouse 16, a communication interface 17, and a bus 18. The above-mentioned display unit and input devices in the server 1 are not indispensable for processing according to the present invention.

The network 2 transmits to each terminal 3 contents data in the HTML document format, the XML document format or the SGML document format transmitted from the server 1 in accordance with a predetermined protocol such as Hypertext Transfer Protocol (HTTP). This embodiment will be described with respect to contents data in the HTML document format by way of example.

Each terminal 3 as the Web clients connected to the server 1 through the network 2 and the communication line 9 can be realized in the form of a personal computer having a Web browser installed therein. That is, the terminal 3 is constituted by a central processing unit (CPU) 6, a hard disk unit (HD) 7 provided as an external storage unit, a display unit (CRT) 8, a keyboard 10 and a mouse 11 provided as input devices, a communication interface (IF) 5, and a bus 4.

In each terminal 3, the communication interface 5 is connected to the network 2 via the communication line 9. The CPU 6, the hard disk unit 7, the display unit 8, the keyboard 10 and the mouse 11 are connected to the bus 4.

The CPU 6 can receive contents data distributed from the server 1 and display the data on the screen of the display unit (CRT) 8 based on a program installed in the hard disk unit (HD) 7. The CPU 6 can not only display contents data distributed from the server 1 but also access data (files) stored in the hard disk unit 7 of the terminal 3 and display contents data read out therefrom.

The CPU 6 also receives an address (URL) and a command input through the keyboard 10 or the mouse 11, and transmits them to the Web server 1 via the communication interface 5, the communication line 9 and the network 2.

### Program Configuration of Server and Terminal

The software configuration of the server 1 and the terminal 3 shown in Fig. 16 will next be described.

A group of programs executed by the CPU 12 in the server 1 includes an operating system (OS) 26 and an application program (APL) 23 installed on the OS 26.

The application program 23 in the server 1 is installed in the hard disk unit 13, is read to a main storage unit (not shown) when necessary, and is executed by the CPU 12. A group of programs executed by the CPU 6 in the terminal 3 includes an operating system (OS) 22 and an application program (APL) 23 installed on the OS 22.

The application program 23 in the terminal 3 is installed in the hard disk unit 7, is read to a main storage unit (not shown) when necessary, and is executed by the CPU 6. The results of execution of the program 23 are displayed by the display unit 8. Commands and data input through the keyboard 10 or mouse 11 are accepted or processed in accordance with the application program 23.

### (Configuration of Application Program)

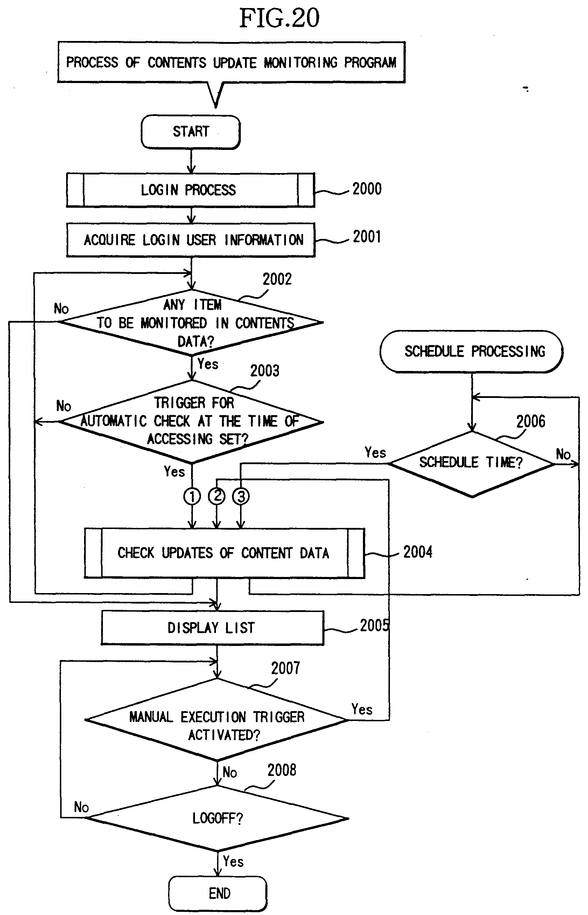

The application program 23 in the server 1 is constituted by a data reproduction and comparison section 25 shown in detail in Fig. 3, and by a contents update monitoring program forming a process shown in Fig. 20. The application program 23 in the terminal 3 is constituted by a data forming section 24 shown in detail in Fig. 3

The data forming section 24 in the application program 23 in the terminal 3 includes as a subsection a data acquisition section 31 having a function of obtaining HTML data transmitted from the Web server 1, and a tree structure forming section 32 having a function of analyzing HTML data to extract a tree structure from an HTML file.

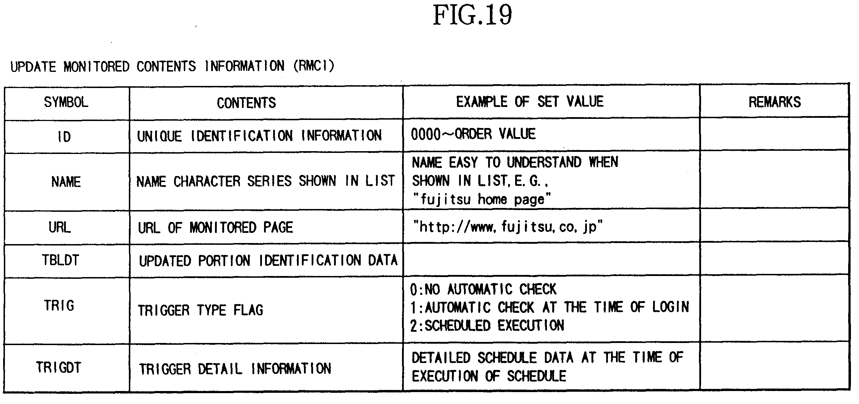

When the user of the terminal 3 designates a particular portion of such a tree structure by using the keyboard 10 or the mouse 11, the tree structure forming section 32 forms table data 33 and selected-portion data 34. Table data 33 and selected-portion data 34 formed by the tree structure forming section 32 are stored in the hard disk unit 7 as update monitored contents information RMCI (see Fig. 19) described below in detail, and are transmitted from the terminal 3 to the server 1 via the network 2 and the communication line 9.

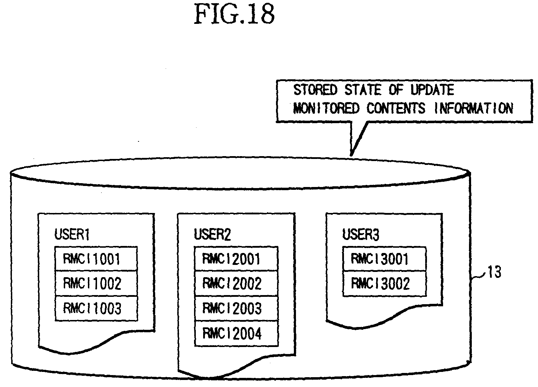

On the other hand, the contents update monitoring program in the application program 23 in the server 1 stores in the hard disk unit 13 the update monitored contents information RMCI transmitted from the terminal 3. The update monitored contents information RMCI is thereby saved (stored) in a state shown in Fig. 18.

The data reproduction and comparison section 25 forming a portion of the contents update monitoring program includes as its subsection a data comparison section 35 for making a comparison between a tree structure formed by the tree structure forming section 32 from data obtained by the data acquisition section 31 and selected-portion data 34 of a tree structure read out from the hard disk unit 13 to determine whether these groups of data match each other. The processings of the data forming section 24 and the data reproduction and comparison section 25 are the same as those in the first embodiment shown in Figs. 11 and 12.

### (Contents Update Monitoring Program)

A process in accordance with the contents update monitoring program installed as the application program 23 in the server 1 will now be described with reference to Fig. 20 and the relating figures.

### <User Authentication Processing>

In the contents update monitoring system of the third embodiment, a user authentication process is required when identification and checking of an updated portion of contents data are executed on the server 1.

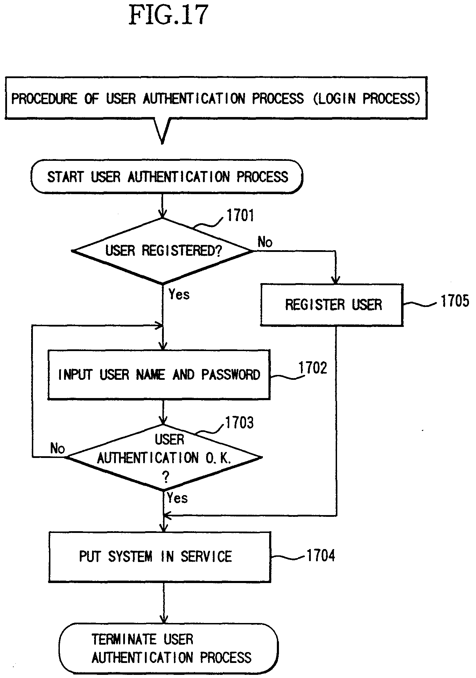

Fig. 17 shows process steps 1701 to 1705 for user authentication in the server 1. User authentication in the server 1 is performed by using a user name and a password as parameters. A user who has not completed a user authentication procedure may register a user name, a password and any other sorts of information (an electronic mail address, etc.) to obtain the update checking service.

After user authentication in the server 1, the user can put the system into service to perform the process of identifying and checking an updated portion of contents data on the server 1. This user authentication process corresponds to login processing in step 2000 of the contents update monitoring program.

### <Update Monitored Contents Information, Login Window>

In the server 1, as shown in Fig. 18, a certain number of groups of update monitored contents information RMCI prepared by each of users User1, User2, and User3 (through each terminal 3) are saved in the hard disk unit 13. When one of the users logs in the necessary data, the update monitoring program of the server 1 obtains from the hard disk unit 13 all the groups of update monitored contents information RMCI prepared by the user.

As shown in Fig. 19, each group of update monitored contents information RMC1 includes a unique identification information ID, a series of name characters to be shown in a list, an address URL of a page to be monitored, an updated portion identification data TBLDT, a trigger type flag TRIG, and trigger detail information TRIGDT.

Updated portion identification data TBLDT corresponds to table data 33 and selected-portion data 34 formed by the above-described process of the data forming section 24 of the application program 23 installed in the terminal 3.

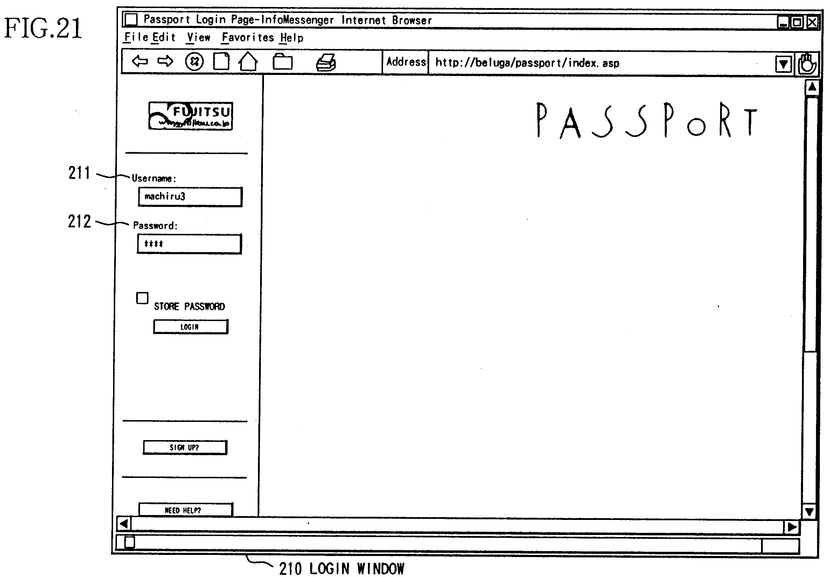

Fig. 21 shows an example of a login window 210 through which a user inputs a user name 211 and a password 212 to the terminal 3 to log them in the server 1. If login processing (step 2000 in Fig. 20) is normally performed, the contents update monitoring program in the server 1 obtains (reads out) all the groups of update monitored contents information RMCI of the user from the hard disk unit 13, and determines a set value of the trigger type flag TRIG.

If the set value of the trigger type flag is "1", that is, if update monitored contents information RMCI exists which includes a setting of a "trigger 1" for "automatically executing a check when the user logs in (accesses) the server 1", the data reproduction and comparison section 25 of the server 1 performs update monitoring of the contents designated by a URL (http://www.fujitsu.co.jp) and thereafter performs processing for displaying a list of monitored contents (steps 2001 to 2005).

### <Triggers for Contents Update Checking Process>

To invoke the data reproduction and comparison section 25 of the contents update monitoring program in the sever 1 for checking an updated portion of contents, i.e., monitoring routine (step 2004), three triggers (means for initiating the process at an opportune time):
trigger 1 for automatically executing checking when the user logs in (accesses) the server 1 (step 2003);
trigger 2 for enabling manual checking by manifestly issuing a check execution command (Step 2007); and
trigger 3 for periodically executing checking according to a schedule (at predetermined times previously entered) (step 2006), are selectively set.

Trigger setting information on settings of these triggers is stored in the hard disk unit 13 as a portion of the update monitored contents information RMCI shown in Fig. 19. That is, trigger type flag TRIG and trigger detail information TRIGDT in the update monitored contents information RMCI correspond to the trigger setting information.

In this embodiment, trigger type flag TRIG "0" designates no automatic checking, "1" designates automatic checking at the time of login (corresponding to trigger 1 shown above), and "2" designates scheduled execution (corresponding to trigger 3 shown above). Trigger detail information TRIGDT designates details of a schedule at the time of scheduled execution in the above trigger 3.

Automatic checking of contents updated portions with these triggers is performed immediately after the user authentication process described above with reference to Fig. 17. Therefore, the user authentication information is known at the time of automatic checking.

### <Monitored Contents List Display Window>

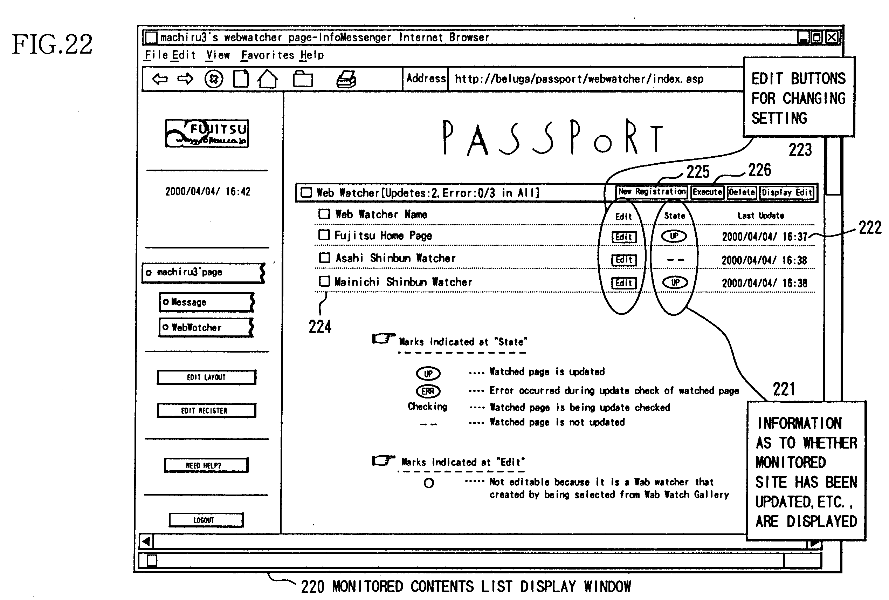

Fig. 22 shows an example of a window 220 for displaying a list of monitored contents. In this window 220, state information 221 as to whether the contents of each site being monitored, i.e., watched pages (monitoring object pages), have been updated is displayed together with a last access date 222.

If an indication mark for state information 221 is "UP", it indicates that the watched page has been updated. If the indication mark for state information 221 is "...", it indicates that the watched page has not been updated.

"Edit" buttons 223 for displaying property sheets for changing the setting are provided in this monitored contents list display window 220. When the "Edit" button 223 is clicked, property sheets are displayed which contain watched pages, keywords, an execution schedule, etc., as properties.

Through the watched page property sheet, monitoring object pages to be watched are designated by inputting URLs, and portion designation setting can also be performed to set a particular portion in each of designated pages as a monitoring object.

Through the keyword property sheet, a keyword can be designated as a watched page update condition. If a keyword is designated, update notification is performed only in a case where the watched page has been changed and where the corresponding contents include the designated keyword. If no keyword is designated, update notification is performed if there is any change in the watched page.

Through the execution schedule property sheet, any one of the execution conditions: no automatic execution, automatic execution at the time of login, and schedule execution, can be selectively set. As scheduled execution conditions, an execution period defined by days, a time, etc., can be set. A name of a Web watcher to be edited can also be designated in another property sheet.

This Web watcher corresponds to the above-mentioned contents update monitoring program for watching the updated state of each of Web pages (home pages) regularly or irregularly updated and for sending update information to the user's terminal 3 when the watched page is updated.

The user can customize the Web watcher by setting properties, such as pages to be watched and an execution schedule, as described above.

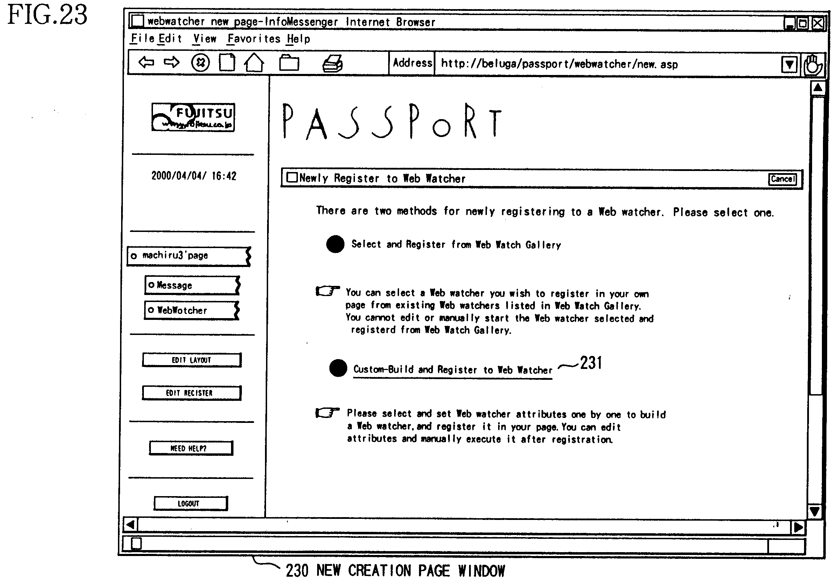

In the list display window 220, a check box 224 on the left-hand side of a Web watcher name, e.g., "Fujitsu Home Page", is provided to enable selection of a watched page as an object of monitoring manually executed or to enable deletion of a watched page. If a "New Creation (New Registration)" button 225 is clicked, a new creation page window 230 such as shown in Fig. 23 is opened to enable the user to newly add a page to be watched.

### <New Creation Page Window>

Through the new creation page window 230 shown in Fig. 23, the user can newly register a Web watcher by selecting one of two methods described below. In the first method, the user can select a Web watcher which the user wishes to register in his or her own page from existing Web watchers listed in a Web watcher gallery. A Web watcher registered by this method cannot be edited or manually executed.

The second method is a method of registering a Webwatcher by custom building. In this method, the user designates Web watcher properties one by one to set all the properties, thereby completing registration of a Web watcher in the user's page. A Web watcher registered by this method can be property-edited or manually executed after being registered.

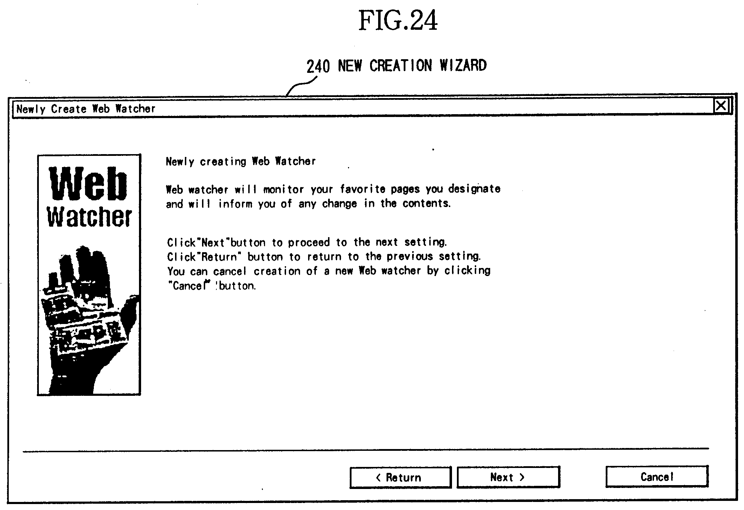

If in the new creation page window 230 a portion 231 corresponding to "Register by Custom Building" is clicked, the application program 23 in the above-described terminal 3 for the user is started by a script to display a start sheet of a new creation wizard 240 shown in Fig. 24.

The user successively sets pages to be watched, keywords, an execution schedule, etc., in accordance with instructions on the start sheet, as does the user at the time of the above-described setting change. The set data is transferred to the server 1 as update monitored contents information. The Web watcher in the server 1 then starts monitoring pages to be watched set by the user, and informs the user of necessary data when some of the corresponding contents is changed.

In the above-described process, the application program 23 installed in the terminal 3 is used for forming update monitored contents information. Alternatively, to execute the above-described process, the server 1 may transmit a program having the same processing functions to the terminal 3 when it receives a new creation command.

### <Manual Execution Window>

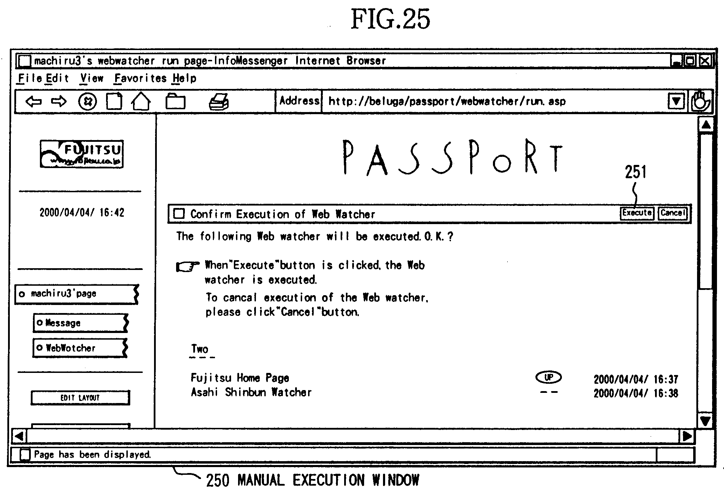

If in the above-described monitored contents list display window 220 the user checks the name of a Web watcher which the user wants to manually execute and clicks an "Execute" button 226, the displayed window is changed to a manual execution window 250 for manual execution confirmation shown in Fig. 25.

If the user clicks an "Execute" button 31 in this manual execution window 250, update checking of the contents of the designated page to be watched is immediately executed (steps 2007, 2004). This content update checking corresponds to the above-mentioned trigger 2, i.e., the manual execution trigger that manifestly (specifically) issues an execution command. If the user logs off through this manual execution window 250, the contents update monitoring program in the server 1 terminates contents update monitoring (step 2008).

### Examples of Modifications

In the above-described third embodiment, the method of comparing date and size data described above with respect to the second embodiment may be used in combination with the trigger conditions.

In the above-described third embodiment, update information is provided on a Web page. The present invention can also be implemented in the mode of the third embodiment in combination with a server using other notification means, e.g., electronic mail for notification of updates.

In each of the above-described embodiments, "contents of a server-or contents data" comprises content held (stored) by the server, and content existing at sites designated by URLs for links to various kinds of information.

Although only a few embodiments of the present invention have been described in detail above, those skilled in the art will readily appreciate that many modifications are possible in the preferred embodiments without departing from the novel teachings and advantages of the present invention. Accordingly, all such modifications are intended to be included within the scope of the present invention as defined by the following claims.

## Claims

1. A method of identifying an updated portion of contents data, comprising the steps of:
receiving the contents data and identifying a portion of the contents data designated by a user;
storing the designated portion of the contents data identified in said identification step;
receiving the contents data again;
extracting, from the contents data again received; a portion corresponding to the designated portion; and
comparing the data extracted in said extraction step and the data stored in said storage step.

2. A method according to Claim 1, further comprising the steps of:
storing a date or a size of the contents data designated by the user; and
comparing a date or a size of the contents data again received and the date or the size stored in said storage step when the contents data is again received,
wherein, if there is a difference in date or size as a result of the comparison in said comparison step, the data extracted in said extraction step and the data stored in said storage step are compared with each other.

3. A method according to Claim 1 or 2, wherein said identification step comprises analyzing the contents data into a tree structure to identify the portion designated by the user.

4. A method according to Claim 3, wherein the contents data includes tag information and display-object contents, and the contents data is analyzed into a tree structure to identify the portion designated by the user by using the tag information.

5. A method according to any of Claims 1 to 4, further comprising the step of notifying the user of a result of the comparison in said comparison step if the result is that there is a difference.

6. A method according to any one of Claims 1 to 5, wherein the contents data is received from an external terminal through a network.

7. A method according to any one of Claims 1 to 6, wherein the contents data is consistent in file name.

8. An apparatus for comparing contents data, comprising:
first data acquisition means for obtaining first contents data;
display control means for displaying the first contents data;
designation means for designating a portion of the displayed first contents data;
identification means for identifying the designated portion of the first contents data;
second data acquisition means for obtaining second contents data;
storage means for storing the designated portion of the first contents data and particular information about the designated portion; and
comparison means for comparing the designated portion read out from said storage means and a corresponding portion data obtained from the second contents data.

9. An apparatus according to Claim 8, wherein said storage means also stores a date or a size of the first contents data, and
wherein said comparison means compares the designated portion read out from said storage means and the corresponding portion data obtained from the second contents data if dates or sizes of the first contents data and the second contents data do not coincide with each other.

10. An apparatus according to Claim 8 or 9, wherein said identification section includes tree structure forming means for analyzing the first contents data into a tree structure, and identifies the designated portion by using the tree structure.

11. An apparatus according to Claim 10, wherein each of the first contents data and the second contents data includes tag information and display-object contents, and said tree structure forming means analyses the first contents data into said tree structure by using the tag information.

12. An apparatus according to Claims 8, 9, 10 or 11, further comprising notification means for providing notification of a result of the comparison by said comparison means if the result is that there is a difference.

13. An apparatus according to any one of Claims 8 to 12, wherein each of the first contents data and the second contents data is received from an external terminal through a network.

14. An apparatus according to any one of Claims 8 to 13, wherein the first contents data and the second contents data are identical in file name.

15. A computer program comprising instructions executable by a computer to perform the method steps of:
receiving the contents data and identifying a portion of the contents data designated by a user;
storing data on the designated portion of the contents
data identified in said identification step;
receiving the contents data again;
extracting, from the contents data again received, a portion corresponding to the designated portion; and
comparing the data extracted in said extraction step and the data stored in said storage step.

16. A computer program comprising instructions executable by a computer to perform the method steps of:
identifying a portion of contents data designated by a user;
storing the designated portion of the contents data identified in said identification step, and a date or a size of the contents data;
comparing a date or a size of the contents data again received and the date or the size stored in said storage step when the contents data is again received,
extracting, from the contents data again received, a portion corresponding to the designated portion of the contents data if there is a difference in date or size as a result of the comparison in said comparison step; and
comparing the data extracted in said extraction step and the data stored in said storage step.

17. A computer program according to Claim 15 or 16, wherein the contents data includes tag information and display-object contents, and said identification step comprises analyzing the contents data by using the tag information to identify the portion designated by the user.

18. A computer program according to any one of Claims 15 to 17, wherein the contents data is received from an external terminal through a network.

19. A computer program according to any one of Claims 15 to 18, wherein the contents data is consistent in file name.

20. A method of identifying an update of contents data forming content accessible via the Internet or an Intranet. comprising the steps of:
storing information on a location of contents data and a designated portion of the contents data;
acquiring contents data designated by the location information; and
comparing the stored designated data portion and a corresponding portion of the contents data acquired in said acquisition step.

21. A method according to Claim 20, wherein the location information of the contents data and the designated portion of the contents data are stored by being related to a user.

22. A method according to Claim 20 or 21, further comprising the step of identifying a user who has gained access, wherein contents data according to the identified user is acquired.

23. A method according to Claim 22, wherein, when a user who has gained access is identified, contents data according to the identified user is acquired.

24. A method according to any of Claims 20 to 23, further comprising the step of providing notification of a result of the comparison in said comparison step if the result is that there is a difference.

25. A method according to any of Claims 20 to 24, wherein the contents data is acquired according to opportune time designation information.

26. An apparatus for comparing contents data forming content accessible via the Internet or an Intranet, comprising:
storage means for storing information on a location of contents data and a designated portion of the contents data;
acquisition means for acquiring contents data designated by the location information; and
comparison means for comparing the stored designated data portion read out from said storage means and a corresponding portion of the contents data acquired by said acquisition means.

27. An apparatus according to Claim 26, wherein the location information of the contents data and the designated portion of the contents data are stored by being related to a user.

28. An apparatus according to Claim 26 or 27, further comprising user identification means for identifying a user who has gained access, wherein said acquisition means acquires contents data according to the identified user.

29. An apparatus according to Claim 27, wherein, when a user who has gained access is identified, said acquisition means acquires contents data according to the identified user.

30. An apparatus according to any of Claims 26 to 29, further comprising notification means for providing notification of a result of the comparison by said comparison means if the result is that there is a difference.

31. An apparatus according to any of Claims 26 to 30, wherein said storage means stores opportune time designation information, and said acquisition means acquires the contents data according to opportune time designation information.

32. A computer program comprising instructions executable by a computer to perform the method steps of:
storing information on a location of contents data and a designated portion of the contents data, the contents data being content in the Internet or an Intranet;
acquiring contents data designated by the location information; and
comparing the stored designated data portion and a corresponding portion of the contents data acquired in said acquisition step.

33. A computer program according to Claim 32, wherein the location information of the contents data and the designated portion of the contents data are stored by being related to a user.

34. A computer program according to Claim 32. or 33 wherein the computer is further made to execute the step of identifying a user who has gained access, and contents data according to the identified user is acquired.

35. A computer program according to Claim 34, wherein, when a user who has gained access is identified, contents data according to the identified user is acquired.

36. A computer program according to any of Claims 32 to 35, wherein the computer is further made to execute the step of providing notification of a result of the comparison in said comparison step if the result is that there is a difference.

37. A computer program according to any of Claims 32 to 36, wherein the contents data is acquired according to opportune time designation information.

38. A computer-readable storage medium on which is recorded the computer program of any of Claims 15 to 19 or 32 to 37.
